(19) Europäisches Patentamt / European Patent Office / Office européen des brevets

(11) **EP 3 066 423 B1**

(12) **EUROPEAN PATENT SPECIFICATION**

(45) Date of publication and mention
of the grant of the patent:
**08.01.2020 Bulletin 2020/02**

(51) Int Cl.:
*G01D 5/353* (2006.01)    *G01M 11/00* (2006.01)
*G01L 1/24* (2006.01)

(21) Application number: **13798946.3**

(22) Date of filing: **05.11.2013**

(86) International application number:
**PCT/EP2013/072981**

(87) International publication number:
**WO 2015/067292 (14.05.2015 Gazette 2015/19)**

(54) **SINGLE-END BRILLOUIN OPTICAL DISTRIBUTED SENSING DEVICE AND METHOD**

VERTEILTE ERFASSUNGSVORRICHTUNG MIT
SINGLE-END-BRILLOUIN-GLASFASERSENSOREN UND VERFAHREN

DISPOSITIF ET PROCÉDÉ DE DÉTECTION OPTIQUE DISTRIBUÉE DE BRILLOUIN SIMPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.09.2016 Bulletin 2016/37**

(73) Proprietor: **Omnisens S.A.**
**1110 Morges (CH)**

(72) Inventors:
• **ROCHAT, Etienne**
  **CH-1412 Valeyres Sous Ursing (CH)**
• **SANGHOON, Chin**
  **CH-1024 Ecublens (CH)**

(74) Representative: **IPAZ**
**Parc Les Algorithmes, Bâtiment Platon**
**CS 70003 Saint-Aubin**
**91192 Gif-sur-Yvette Cedex (FR)**

(56) References cited:
**WO-A1-2011/022829    WO-A1-2013/185813**

• **WEIWEN ZOU ET AL: "Single-End-Access
Correlation-Domain Distributed Fiber-Optic
Sensor Based on Stimulated Brillouin
Scattering", JOURNAL OF LIGHTWAVE
TECHNOLOGY, IEEE SERVICE CENTER, NEW
YORK, NY, US, vol. 28, no. 18, 15 September 2010
(2010-09-15), pages 2736-2742, XP011315859,
ISSN: 0733-8724**
• **WEIWEN ZOU ET AL: "Complete discrimination
of strain and temperature using Brillouin
frequency shift and birefringence in a
polarization-maintaining fiber", OPTICS
EXPRESS, vol. 17, no. 3, 2 February 2009
(2009-02-02), page 1248, XP055057935, ISSN:
1094-4087, DOI: 10.1364/OE.17.001248**

EP 3 066 423 B1

## Description

### Field of the invention

The invention relates to an optical time domain analyzer device implementing stimulated Brillouin scattering detection scheme with a single sensing optical fiber.

The field of the invention is, but not limited to, distributed temperature, strain and pressure sensing using Brillouin scattering.

### Background of the invention

Brillouin Optical Time Domain Analysers (BOTDA) are very efficient temperature and strain sensing devices based on stimulated Brillouin scattering.

Sensing is achieved by the interaction of a continuous wave probe counter-propagating with respect to a pulsed pump wave. In order to bring the probe to the far end of the sensing optical fiber, a second fiber, the lead fiber is used. The two fibers, namely the sensing fiber and the lead fiber, are connected at the far end, thus forming a loop.

In some application fields, for instance for temperature monitoring of oil wells (under the generic term of downholes), building a loop is difficult because fiber bending radii are not compatible with the tight space available. In addition, locally high temperature may weaken fibers bent with small radii of curvature.

Such environment could be measured using single-end technology, such as for instance Brillouin Optical Time Domain Reflectometers (BOTDR). However, a BOTDR has a reduced optical budget, making it incompatible with the connectors and additional losses encountered in a downhole environment for instance. In addition, the accuracy and spatial resolution of such systems are usually not sufficient.

Single-end BOTDA techniques have been proposed. A mirror is added at the end of the sensing fiber for reflecting the signals, creating thus a forth and back path which allows generating a continuous probe wave counter-propagating with respect to (and interacting with) a pulsed pump wave. The mirror may be for instance a simple pigtailed classical mirror or a Fiber Bragg Grating (FBG) mirror.

This solution is efficient but suffers from major drawbacks. As the probe wave is a continuous wave which propagates in both directions along the sensing fiber, some interferometric noise is generated by the interaction of these forth and back waves. In addition, the probe beam travelling towards the mirror acts as a pump which creates a Rayleigh scattering signal overlapping the probe returning from the mirror, thus further adding to the noise. As a result, such a configuration can be five times worse than a loop configuration in terms of noise depending on the fiber length and the optical budget.

The document WO 2011/022829 is known. It discloses a single-end BOTDA technique in which the polarization of the pump and the probe waves are managed to limit the interferometric noise. The pump and probe waves are linearly polarized and orthogonal to each other. The probe wave is reflected at the end of the sensing fiber on a Faraday Rotating Mirror (FRM) so that the incident probe wave and the reflected probe wave are rotated by 90 degrees. As forward travelling and backward travelling probe are now orthogonal, results are improved.

However, as the polarization is not maintained along the sensing fiber, interference noise and Rayleigh scattering are still present and reduce the accuracy of the system. In addition, the technique requires a Faraday Rotating Mirror which is bulky and not adapted for high temperature operation.

Another problem of classical BOTDA techniques is that their sensitivity to radial pressure is very low. The radial pressure is the pressure which is exerted by the environment on the sensing fiber, such as a hydrostatic pressure. It may be exerted radially (or perpendicularly to the fiber's elongation axis), in a homogeneous and symmetrical way around a section of fiber.

Article by WEIWEN ZOU ET AL published in JOURNAL OF LIGHTWAVE TECHNOLOGY, IEEE SERVICE CENTER, NEW YORK, NY, US, vol. 28, no. 18, 15 September 2010 (2010-09-15),pages 2736-2742, describes a single-End-Access Correlation-Domain Distributed Fiber-Optic Sensor Based on Stimulated Brillouin Scattering.

Article by WEIWEN ZOU ET AL published in OPTICS EXPRESS, vol. 17, no. 3, 2 February 2009 (2009-02-02), page 1248, describes a method for discrimination of strain and temperature using Brillouin frequency shift and birefringence in a polarization-maintaining fiber.

WO 2013/185813 describes a method for performing distributed pressure sensing comprising the steps of forming a grating in a birefringent fiber, measuring the birefringence distribution along the length of the birefringent fiber, and determining pressure present along the length of the fiber using the measured the birefringence distribution. WO 2013/185813 has been published after the priority date of the present patent and is not relevant to the question of the inventive step of the present patent.

It is an object of the invention to provide a single-end Brillouin distributed sensor with improved performance and better management of interferometric noises.

It is a further object of the invention to provide a single-end Brillouin distributed sensor adapted for measurements in downholes, possibly at high temperatures.

It is a further object of the invention to provide a single-end Brillouin distributed sensor able to do radial pressure measurements with a good sensitivity.

## Summary of the invention

Such objects are accomplished by a Brillouin optical distributed sensing method according to claim 1.

According to some modes of implementation, the method of the invention may further comprise steps of:

- transferring a second optical probe wave into the sensing optical fiber with its polarization aligned with the second birefringent axis of said fiber,
- relatively positioning in frequency said second optical probe wave and the first optical probe wave so as to generate a dynamic Brillouin grating into the sensing optical fiber by stimulated Brillouin scattering interaction between, respectively, the incident first optical probe wave and the reflected second optical probe wave on the first birefringent axis, or the reflected first optical probe wave and the incident second optical probe wave on the second birefringent axis,
- deducing a birefringence information and/or a distributed radial pressure information using, respectively, the spontaneous Brillouin scattering of the incident optical pulsed pump wave by said dynamic Brillouin grating on the second birefringent axis, or the spontaneous Brillouin scattering of the reflected optical pulsed pump wave by said dynamic Brillouin grating on the first birefringent axis.

## Description of the drawings

The methods according to embodiments of the present invention may be better understood with reference to the drawings, which are given for illustrative purposes only and are not meant to be limiting. Other aspects, goals and advantages of the invention shall be apparent from the descriptions given hereunder.

- Fig. 1 shows a first mode of realization of the invention, adapted for measuring temperature and/or strain
- Fig. 2 shows a light reflecting means of the invention using a section of polarization maintaining fiber, with on Fig 2(a) a side view and on Fig. 2(b) a cut view showing the birefringent axes.
- Fig. 3 shows a second mode of realization of the invention, also adapted for measuring the radial pressure.

## Detailed description of the invention

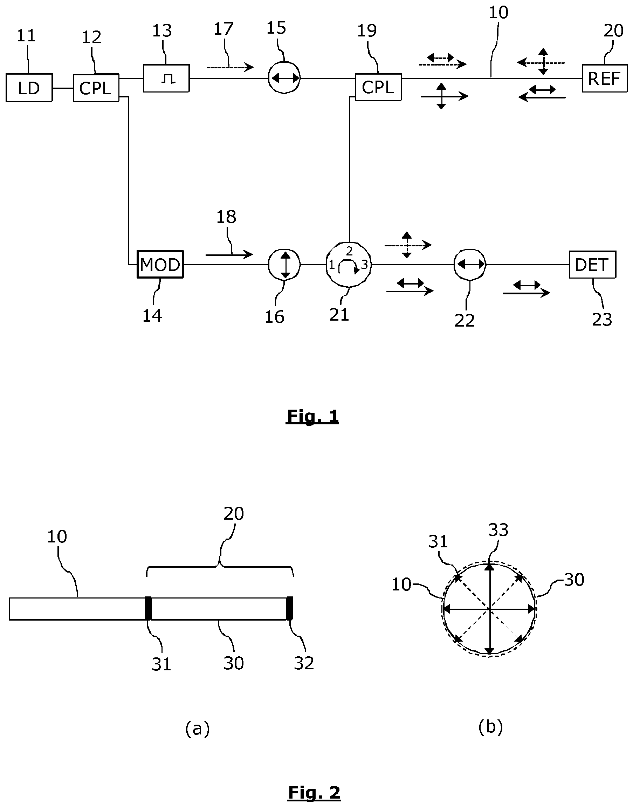

With reference to figure 1, we will now describe a mode of realization of a Brillouin optical distributed sensing device.

For the sake of clarity, only the components which are relevant for the description of the invention are shown on Fig. 1. Of course, the device may include any other necessary components, such as amplifiers, isolators, polarizers...

In the mode of realization presented on Fig. 1, the sensing device comprises a light source 11 which is used for generating all necessary optical signals. This light source 11 comprises a distributed feedback laser diode (DFB-LD) with a wavelength around 1.5 $\mu$m, which generates a continuous wave.

A source coupler 12 directs a part of the light issued from the source 11 towards a pulse generator 13 for generating an optical pulsed pump wave 17.

The pulse generator 13 comprises a semiconductor optical amplifier (SOA) driven by an electrical pulsed signal. It is used as an optical gating device for generating the optical pulsed pump wave 17.

The source coupler 12 directs also a part of the light issued from the source 11 towards a probe modulator 14 for generating a probe wave 18.

The probe modulator 14 comprises an electro-optic modulator 14 configured so as to modulate the intensity of the incoming signal according to a Dual Side Band with Suppressed Carrier (DBS-SC) modulation scheme. So, the generated optical probe signal comprises two spectral components located symmetrically relative to the frequency of the laser source 11. The frequency of these spectral components may be varied by varying the control signal applied to the electro-optic modulator 14.

The electro-optic modulator 14 is preferably a lithium niobate electro-optic modulator based on a Mach-Zehnder architecture. In order to generate the Dual Side Band with Suppressed Carrier (DSB-SC) modulation, a control signal is applied, which comprises:

- a bias voltage establishing a destructive interferences condition between the optical waves in both arms of the interferometer (extinction condition), and,
- a modulation frequency corresponding to the desired frequency shift of the spectral components of the optical probe signal relative to the optical frequency of the incoming optical signal.

The device further comprises a polarization-maintaining sensing coupler 19 which allows combining the pulsed pump wave 17 and the probe wave 18, and transferring them into the sensing optical fiber 10.

The device further comprises an optical circulator 21. Such optical circulator 21 is a well-known optical component which allows:

- directing an optical signal incident on a first branch (label "1") of the circulator to a second branch (label "2"), and
- directing an optical signal incident on the second branch of the circulator (label "2") to a third branch (label "3").

The optical circulator 21 is arranged so as to:

- direct the probe wave 18 which is incident on its first branch towards the sensing coupler 19, and
- direct the signals emerging from the sensing coupler 19 which are incident on its second branch towards a photodetector 23, for detection and further processing.

As previously explained, the optical set-up is arranged so as to be able to manage the polarization of the optical waves. So it uses mostly polarization maintaining optical fibers and components, at least for the parts where the polarization needs to be managed.

The pulsed pump wave 17 and the probe wave 18 which are incident on the sensing coupler 19 are linearly polarized waves, each aligned with a different birefringent axis of the polarization maintaining fibers of the sensing coupler 19. So both waves have linear polarization orthogonal to each other.

The polarization of the pulsed pump wave 17 and of the probe wave 18 are respectively managed by the pump polarization controller 15 and the probe polarization controller 16.

Depending on the state of polarization of the respective incident waves, the pump polarization controller 15 and the probe polarization controller 16 may comprise any necessary well-known components, such as for instance:

- polarizers for filtering out wave components with unwanted polarization modes,
- polarization controllers or waveplates such as quarter wave plates or half wave plates for rotating linear polarizations or transforming elliptical polarizations into linear polarizations.

The sensing fiber 10 is a polarization maintaining fiber, or more generally speaking a birefringent fiber with a refractive index asymmetry which allows maintaining the polarization of linearly polarized waves injected along its principal birefringent axes.

The pulsed pump wave 17 and the probe wave 18 with linear orthogonal polarization are transferred into that sensing fiber 10 through the sensing coupler 19, with their respective polarization aligned with the birefringent axes of the sensing fiber 10.

The pulsed pump wave 17 and the probe wave 18 are reflected at the end of the sensing fiber 10 by a light reflecting means 20, in such a way that an incident wave linearly polarized along one birefringent axis of the sensing fiber 10 is reflected with a linear polarization aligned along the other birefringent axis of that sensing fiber 10.

The detailed description of that light reflecting means 20 will be done later.

As a result, the reflected probe wave 18 is linearly polarized along the same birefringent axis as the incident pulsed pump wave 17 and both waves propagates in opposite directions. Provided that their respective frequencies are correctly set as explained later, the conditions are met to generate a stimulated Brillouin scattering signal resulting from the interactions in the sensing fiber 10 of the reflected optical probe wave 18 with the incident optical pulsed pump wave 17.

The stimulated Brillouin scattering signal is directed through the sensing coupler 19 and the circulator 21 towards the detector 23 for further processing.

A polarizer 22 is inserted between the circulator 21 and the detector 23 for rejecting the pulsed pump wave 17 reflected by the light reflecting means 20, which emerge from the circulator with a polarization perpendicular to the direction of polarization of the stimulated Brillouin scattering signal.

The polarizer 22 is not mandatory if an optical bandpass filter is inserted before the detector 23 for rejecting the unwanted optical frequencies, as it will be explained later.

With reference to Fig. 2(a) and Fig. 2(b), the light reflecting means 20 comprises a section 30 of Polarization Maintaining (PM) fiber.

The length of that section 30 of PM fiber is adjusted so as to introduce a phase shift of about 90 degrees (at the wavelengths of interest) between the polarization modes of an incident wave propagating respectively on the two birefringent axes. This can be achieved by adjusting that length so that it corresponds to about one or an odd multiple of a quarter of the beat length of the PM fiber at the wavelengths of interest.

The section 30 of PM fiber is attached to the sensing fiber 10 with a splicing 31. The cores of the two fibers are locally fused.

As shown on Fig. 2(b), the splicing 31 is done so that the sensing fiber 10 and the section 30 of PM fiber are angularly positioned relative to each other so that the birefringent axes 33 of the sensing fiber are shifted of about 45 degrees (in absolute value) relative to the birefringent axes 31 of the section 30 of PM fiber.

So, the section 30 of PM fiber behaves as a quarter wave plate for the waves emerging from the sensing fiber 10.

The terminal end 32 of the section 30 of PM fiber is coated with a high-reflectivity dielectric coating or a metal coating, so as to reflect efficiently the incident waves. The coating may be done by a vacuum deposition process.

So, the light reflecting means 20 behaves like a quarter wave plate positioned at 45 degrees from the polarization axis of the incident waves and a mirror. It has the advantages of being as compact as a pigtail mirror, and robust to severe and high-temperature environments.

The device allows performing distributed strain and temperature measurements along the sensing fiber 10 using a classical stimulated Brillouin scattering detection scheme.

The optical pulsed pump wave 17 comprises an optical frequency $v_{PU}$ which corresponds to the optical frequency of the laser source 11.

The optical probe wave 18 comprises two spectral components of optical frequencies $v_{PR+}$ and $v_{PR-}$. These spectral components are located symmetrically relative to the optical frequency $v_{PU}$ of the pulsed signal.

The propagation in the forward direction of the optical pulsed wave in the sensing fiber 10 generates Brillouin scattering. The spectrum of that Brillouin scattering comprises two spectral components, including a Stokes component around a center frequency $v_{sBS}$ lower than the pulsed signal optical frequency $v_{PU}$ and an anti-Stokes component around a center frequency $v_{sBaS}$ higher than the pulsed signal optical frequency $v_{PU}$. As the spontaneous Brillouin scattering depends on the local conditions along the sensing fiber 10, the Brillouin spectrum may also vary along the fiber depending on the local conditions of temperature and strain.

As previously explained, the backward-propagating optical probe wave 18 (after reflection by the light reflecting means 20) propagates in the sensing fiber 10 with a state of polarization parallel to that of the forward-propagating optical pulsed wave 17. So both waves may interact.

For performing measurements, the frequency of the optical probe wave 18 is varied using the probe modulator 14 so as to scan the frequency ranges where Brillouin scattering may appear.

When the optical frequency of the backward-propagating optical probe wave 18 is scanned over the spectral range of the spontaneous Brillouin scattering generated by the optical pulsed wave in the sensing fiber 10, an energy transfer occurs between both signals, which modifies the amplitude of the backward-propagating optical probe wave. The optical frequency of the probe wave at which the maximum modification of the probe wave amplitude occurs is defined as the Brillouin frequency. The energy transfer induces a gain in the Stokes region of the Brillouin spectrum and a loss in the anti-Stokes region.

The Stokes region of the Brillouin spectrum is then filtered out by an optical bandpass filter, not shown, which is inserted between the circulator 21 and the photodetector 23. So, only the anti-Stokes region is transmitted towards the photodetector 23, which measures its intensity.

That optical bandpass filter comprises an optical circulator with a Fiber Bragg Grating (FBG) on one branch. The optical waves which are incident on a first branch of the circulator are transmitted to a second branch with the FBG. Only the optical waves whose wavelength matches the Bragg reflection condition of the FBG are reflected towards the circulator, and transmitted via the third branch towards the photodetector 23.

So, for a given probe frequency $v_{PR+}$, we obtain at the output of the photodetector 23 an electrical signal whose time profile is representative of the Brillouin scattering along the sensing fiber 10 at that probe frequency $v_{PR+}$. Knowing the speed of light in the fiber, the time profile may be converted in distance profile. The resolution in distance or time of the measurements depends on the pulse duration of the optical pulsed signal.

Then, by scanning the probe frequency $v_{PR+}$ over the frequency ranges where Brillouin spectrum may appear, the Brillouin scattering spectrum may be sampled in frequency for any location along the sensing fiber 10.

It is to be noted that the forward propagating optical probe wave 18 propagates in the sensing fiber 10 with a state of polarization parallel to that of the backward-propagating optical pulsed wave 17 (after reflection by the light reflecting means 20). So both waves may also interact and generate a secondary stimulated Brillouin scattering signal. That secondary stimulated Brillouin scattering signal propagates towards the light reflecting means 20 in which it is reflected back with a linear polarization aligned along the other birefringent axis of the sensing fiber 10.

As a result, both stimulated Brillouin scattering signals propagate towards the detector 23 with the same state of polarization relative to the birefringent axis of the sensing fiber 10, so both may be detected.

Actually, the two stimulated Brillouin scattering signals are separated in time on the photodetector 23:

- the stimulated Brillouin scattering signal resulting from an interaction of the forward-propagating optical pulsed wave 17 with the backward-propagating optical probe wave 18 travels only along a single forth and back path along the sensing fiber 10, up to the interaction zone;
- the secondary stimulated Brillouin scattering signal resulting from an interaction of the backward-propagating optical pulsed wave 17 with the forward-propagating optical probe wave 18 travels forth along the whole sensing fiber 10 up to the light reflecting means 20, then back to the interaction zone, forth to the light reflecting means 20 and back along the whole sensing fiber 10.

So, these two stimulated Brillouin scattering signals may be detected separately, of at least distinguished from each other.

Advantageously, these two stimulated Brillouin scattering signals have a different Brillouin frequency, because they result respectively from Brillouin interactions along the two different birefringent axes of the sensing fiber 10, which have different indices of refraction.

As each of these Brillouin frequencies depends on the temperature and the strain, by solving an equation system with two equations and two unknowns, the temperature and the strain may be calculated separately along the fiber.

It should be noted that this simultaneous measurement of the strain and the temperature is made possible by the use of the birefringent sensing fiber 10. If the fiber was not birefringent, we would just have two times the same Brillouin frequency measurement, on which the effects of the temperature and the strain may not be separated.

The mode of realization of Fig. 1 allows thus measuring temperature and/or longitudinal strain along the sensing fiber 10.

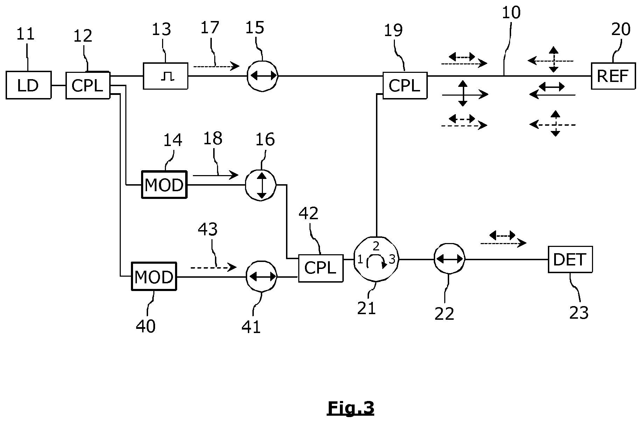

With reference to Fig. 3, we will now describe a second mode of realization of the invention which allows measuring the radial pressure along the sensing fiber 10.

Such measurement may be useful in some applications such as for instance deep well monitoring in the oil extraction industry.

In the general case, the radial pressure cannot be efficiently measured with a BOTDA technique, because the sensitivity of the Brillouin frequency shift to such radial pressure is very low.

But, thanks to the use of polarization-maintaining sensing fibers, the radial pressure may be measured efficiently with a device.

It should be clearly understood that the second mode of realization may be implemented in a system able to perform radial pressure measurements only, or in a system able to perform simultaneously or sequentially distributed measurements of any or several of the following information: temperature, longitudinal or axial strain, radial pressure.

In the following, only the parts of the set-up shown on Fig. 3 which differs significantly from the set-up of Fig. 1 will be described in detail.

In the mode of realization presented on Fig. 3, the sensing device comprises a light source 11 which is used for generating all necessary optical signals. This light source 11 comprises a distributed feedback laser diode (DFB-LD) with a wavelength around 1.5 $\mu$m, which generates a continuous wave.

A source coupler 12 directs a part of the light issued from the source 11 towards a pulse generator 13 for generating an optical pulsed pump wave 17.

The pulse generator 13 comprises a semiconductor optical amplifier (SOA) driven by an electrical pulsed signal. It is used as an optical gating device for generating the optical pulsed pump wave 17.

The source coupler 12 directs also parts of the light issued from the source 11 towards:

- a first probe modulator 14 for generating a first probe wave 18, and
- a second probe modulator 40 for generating a second probe wave 43.

The first probe modulator 14 and the second probe modulator 40 comprise an electro-optic modulator configured so as to modulate the intensity of the incoming signal according to a Dual Side Band with Suppressed Carrier (DBS-SC) modulation scheme, as explained in relation with Fig. 1. So, the first and the second generated optical probe signal comprise respectively two spectral components located symmetrically relative to the frequency of the laser source 11. The frequency of these spectral components may be varied by varying the control signals applied respectively to the electro-optic modulator of the first probe modulator 14 and the second probe modulator 40.

The device further comprises a polarization-maintaining probe coupler 42 which allows combining the first probe wave 18 and the second probe wave 43, and transferring them toward the sensing optical fiber 10.

The polarization of the first probe wave 18 and the second probe wave 43 are respectively managed by the polarization controller 16 and 41, so that the first probe wave 18 and the second probe wave 43 which are incident on the probe coupler 42 are linearly polarized waves, each being aligned with a different birefringent axis of the polarization maintaining fibers of that probe coupler 42. So both waves have linear polarization orthogonal to each other.

The first probe wave 18 and the second probe wave 43 are then directed by the optical circulator 21 towards the polarization-maintaining sensing coupler 19 in which they are combined with the pulsed pump wave 17, and transferred into the sensing optical fiber 10.

The polarization of the pulsed pump wave 17 is managed by the polarization controller 15 so that the pulsed pump wave 17 which is transferred in the sensing fiber 10 is linearly polarized, with the polarization axis aligned with a birefringent axis of the sensing fiber 10.

So, in the mode of realization shown on Fig. 3:

- the first probe wave 18 as transferred in the sensing optical fiber 10 has a polarization mode aligned with a first birefringent axis of the fiber, which may be without loss of generality the slow axis;
- the pulsed pump wave 17 and the second probe wave 43 as transferred in the sensing optical fiber 10 have a polarization mode aligned with a second birefringent axis of the fiber, which may be without loss of generality the fast axis.

The waves are reflected at the end of the sensing fiber 10 by a light reflecting means 20, in such a way that an incident wave linearly polarized along one birefringent axis of the sensing fiber 10 is reflected with a linear polarization aligned along the other birefringent axis of that sensing fiber 10.

As a result, in the sensing fiber 10,

- the reflected backward-propagating second probe wave 43 is linearly polarized along the same birefringent axis (the first axis) as the incident forward-propagating first probe wave 18 and both probe waves propagates in opposite directions.
- the incident forward-propagating pulsed pump wave 17 is linearly polarized along the other birefringent axis (the second axis).

Polarization-maintaining fibers are intrinsically sensitive to radial pressure. More precisely, their birefringence **An**, which is the difference between the effective refractive indexes along the birefringent axes, is proportional to the ambient pressure **p**.

In order to measure that birefringence, the method of the invention comprises steps of:

- generating a dynamic Brillouin grating along the first birefringent axis of the sensing fiber 10 using stimulated Brillouin scattering resulting from the interaction of the two counter-propagating probe waves 18, 43, and
- measuring the optical pitch of that dynamic Brillouin grating along the second birefringent axis by measuring the spontaneous Brillouin scattering generated by the interaction of the dynamic Brillouin grating with the incident (forward-propagating) pulsed pump wave 17.

More precisely, the dynamic Brillouin grating is obtained by generating an acoustic wave in the sensing fiber 10 by parametric interaction of ordinary stimulated Brillouin scattering between the two counter-propagating optical probe waves 18, 43.

The frequencies of the two probe waves 18, 43 are adjusted so that to obtain a spectral separation $\Delta v = v_{P1} - v_{P2}$ between them matching the acoustic wave frequency $v_B$ which is also the Brillouin frequency shift along the first birefringent axis of the sensing fiber 10 ($\Delta v = v_B$). The frequency $v_{P1}$ of the forward-propagating first probe wave 18 is set higher than the frequency $v_{P2}$ of the backward-propagating second probe wave 43, so spontaneous Stokes Brillouin scattering generated from the pulsed pump 17 while propagating through the sensing fiber 10 is used for performing radial pressure measurements along the sensing fiber 10.

In these conditions, the beating signal resulting from the mutual interference reinforces the acoustic wave and the material density turns to be periodically modulated along the sensing fiber 10 due to the electrostriction phenomenon. As a result, a periodic modulation of the refractive index (resulting from the density acoustic wave) backscatters the higher frequency first probe wave 18 and the scattered photons are transferred to the lower frequency second probe wave 43 due to the Doppler effect.

Due to the fiber birefringence, the phase matching conditions for Brillouin scattering is different on the two principal birefringent axes of the sensing fiber 10. So the grating resonance "seen" by the forward-propagating pulsed pump wave 17 which is orthogonally polarized with respect to the two interacting probe waves 18, 43 appears when the forward-propagating pulsed pump wave 17 is around a frequency $v_{PL}$ which depends on the fiber birefringence $\Delta$n:

$$v_{PL} = v_{P1} \left(1 + \Delta n / n \right),$$

where **n** is the effective refractive index of the fiber.

The interaction between the forward-propagating pulsed pump wave 17 and the dynamic Brillouin grating generates then a backward-propagating spontaneous Brillouin scattering signal at a frequency $v_s = v_{PL} - v_B$.

The scattering signal generated by the interaction of the dynamic Brillouin grating with the incident pulsed pump wave 17 is directed by the sensing coupler 19 and the circulator 21 towards the photodetector 23. By scanning the frequencies of the two probe waves 18, 43 relative to the frequency of the pulsed pump wave 17 and by analyzing the time profile of the scattering signal, the birefringence of the sensing fiber 10 may be determined at any position, and thus the radial pressure.

An optional polarization filter 22 and an optical filter (not shown) inserted between the circulator 21 and the photodetector 23 reject most of the unwanted signals and frequency components.

Provided that the frequencies of the two probe waves 18, 43 and the pulsed pump wave 17 are correctly adjusted, is also possible to measure the birefringence of the sensing fiber 10 by:

- generating a dynamic Brillouin grating along the second birefringent axis of the sensing fiber 10, using stimulated Brillouin scattering resulting from the interaction of the backward-propagating first optical probe wave 18 and the forward-propagating second optical probe wave 43, and
- measuring the optical pitch of that dynamic Brillouin grating along the first birefringent axis by measuring the spontaneous Brillouin scattering generated by the interaction of the dynamic Brillouin grating with the backward-propagating pulsed pump wave 17.

The frequencies of the two probe waves 18, 43 are adjusted so that to obtain a spectral separation $\Delta v = v_{P2} - v_{P1}$ between them matching the acoustic wave frequency $v'_B$ which is also the Brillouin frequency shift along the second birefringent axis of the sensing fiber 10 ($\Delta v = v'_B$). The frequency $v_{P1}$ of the backward-propagating first probe wave 18 is set lower than the frequency $v_{P2}$ of the forward-propagating second probe wave 43, so spontaneous anti-Stokes Brillouin scattering is used.

Under these conditions, the grating resonance "seen" by the backward-propagating pulsed pump wave 17 which is orthogonally polarized with respect to the two interacting pumps waves 18, 43 appears when the backward-propagating pulsed pump wave 17 is around a frequency $v'_{PL}$ which depends on the fiber birefringence $\Delta$n:

$$v'_{PL} = v_{P1} \left(1 - \Delta n / n \right),$$

where n is the effective refractive index of the fiber.

The interaction between the backward-propagating pulsed pump wave 17 and the dynamic Brillouin grating generates then a forward-propagating spontaneous Brillouin scattering signal at a frequency $v'_s = v'_{PL} + v'_B$.

That forward-propagating spontaneous Brillouin scattering signal propagates towards the light reflecting means 20 in which it is reflected back with a linear polarization aligned along the second birefringent axis of the sensing fiber 10.

As a result, both spontaneous Brillouin scattering signals propagate towards the detector 23 with the same state of polarization relative to the birefringent axis of the sensing fiber 10, so both may be detected. They are also separated in time on that photodetector 23, because of the difference of optical paths.

According to some modes of realization, the first and the second mode of realization of the invention may be implemented using:

- several laser sources,
- one laser source for generating each pump or probe wave,
- tunable laser sources for shifting the frequency of the optical waves without using modulators.

According to some modes of realization, the second mode of realization of the invention may be implemented using an additional electro-optic modulator configured so as to modulate the intensity of the incoming signal according to a Dual Side Band with Suppressed Carrier (DBS-SC) modulation scheme, for varying the frequency of the pulsed pump wave 17.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the scope of claim 1 of this invention.

**Claims**

1. A Brillouin optical distributed sensing method, using a distributed sensor with a polarization maintaining sensing optical fiber (10) having two birefringent axes, the method comprising the steps of:

   - using optical coupling means (19, 21, 22) connected to a first end of said sensing optical fiber (10), (i) transferring into said sensing optical fiber (10) at least one linearly polarized first optical probe wave (18) aligned with a first birefringent axis and one linearly polarized optical pulsed pump wave (17) aligned with a second birefringent axis, and (ii) transferring optical waves emerging from said sensing optical fiber toward detection means (23),
   - using a light reflecting means (20) connected to a second end of the sensing optical fiber (10), reflecting the optical waves and shifting the direction of polarization of the reflected optical waves relative to the incident optical waves from one birefringent axis to the other.

   the method being **characterized in that** it further comprises the steps of:

   - relatively positioning in frequency the first optical probe wave (18) and the optical pulsed pump wave (17) so as to generate into the sensing optical fiber (10) a first stimulated Brillouin scattering interaction between the reflected optical probe wave and the incident optical pulsed pump wave, and a second stimulated Brillouin scattering interaction between the incident optical probe wave and the reflected optical pulsed pump wave,
   - deducing distributed temperature and distributed strain information along the sensing optical fiber (10) using said first stimulated Brillouin scattering interaction and said second stimulated Brillouin scattering interaction.

2. The method of claim 1, which further comprises steps of:

   - transferring a second optical probe wave (43) into the sensing optical fiber (10) with its polarization aligned with the second birefringent axis of said fiber (10),
   - relatively positioning in frequency said second optical probe wave (43) and the first optical probe wave (18) so as to generate a dynamic Brillouin grating into the sensing optical fiber by stimulated Brillouin scattering interaction between, respectively, the incident first optical probe wave and the reflected second optical probe wave on the first birefringent axis, or the reflected first optical probe wave and the incident second optical probe wave on the second birefringent axis,
   - deducing a birefringence information and/or a distributed radial pressure information using, respectively, the spontaneous Brillouin scattering of the incident optical pulsed pump wave (17) by said dynamic Brillouin grating on the second birefringent axis, or the spontaneous Brillouin scattering of the reflected optical pulsed pump wave (17) by said dynamic Brillouin grating on the first birefringent axis.

**Patentansprüche**

1. Optisches verteiltes Brillouin-Sensorverfahren, das einen verteilten Sensor mit einer polarisationserhaltenden optischen Sensorfaser (10) mit zwei doppelbrechenden Achsen verwendet, mit den Schritten:

   - Verwenden von optischen Kopplungsmitteln (19, 21, 22), die mit einem ersten Ende der optischen Sensorfaser (10) verbunden sind, (i) Einleiten zumindest einer linear polarisierten ersten optischen Sondierungswelle (18), die entlang einer ersten doppelbrechenden Achse ausgerichtet ist, in die optische Sensorfaser (10) und einer linear polarisierten optischen gepulsten Pumpwelle (17), die entlang einer zweiten doppelbrechenden Achse ausgerichtet ist, und (ii) Leiten optischer Wellen, die aus der optischen Sensorfaser austreten, zu Detektionsmitteln (23),
   - Verwenden eines Lichtreflektionsmittels (20), das mit einem zweiten Ende der optischen Sensorfaser (10) verbunden ist, welches die optischen Wellen reflektiert und die Polarisationsrichtung der reflektierten optischen Wellen relativ zu den einfallenden Wellen von einer doppelbrechenden Achse zur anderen verschiebt,

   wobei sich das Verfahren durch die folgenden zusätzlichen Schritte auszeichnet:

   - Relativ-Positionieren der ersten optischen Sondierungswelle (18) und der optischen gepulsten Pumpwelle (17) bezüglich der Frequenz, sodass in der optischen Sensorfaser (10) eine erste stimulierte Brillouin-Streuungs-Wechselwirkung zwischen der reflektierten optischen Sondierungswelle und der einfallenden optischen gepulsten Pumpwelle, und eine zweite stimulierte Brillouin-Streuungs-Wechselwirkung zwischen der einfallenden optischen Sondierungswelle und der reflektierten optischen gepulsten Pumpwelle erzeugt wird,
   - Ableiten verteilter Temperatur- und verteilter Belastungsinformationen der optischen Sensorfaser (10) unter Verwendung der ersten stimulierten Brillouin-Streuungs-Wechselwirkung und der zweiten stimulierten Brillouin-Streuungs-Wechselwirkung.

2. Verfahren nach Anspruch 1, mit den weiteren Schritten:

   - Einleiten einer zweiten optischen Sondierungswelle (43) in die optische Sensorfaser (10), deren Polarisation entlang der zweiten doppelbrechenden Achse der Faser (10) ausgerichtet ist,

   - Relativ-Positionieren der zweiten optischen Sondierungswelle (43) und der ersten optischen Sondierungswelle (18) bezüglich der Frequenz, sodass ein dynamisches Brillouin-Gitter in der optischen Sensorfaser durch stimulierte Brillouin-Streuungs-Wechselwirkung zwischen der einfallenden ersten optischen Sondierungswelle und der reflektierten zweiten optischen Sondierungswelle an der ersten doppelbrechenden Achse beziehungsweise der reflektierten ersten optischen Sondierungswelle und der einfallenden zweiten optischen Sondierungswelle an der zweiten doppelbrechenden Achse, erzeugt wird,
   - Ableiten einer Doppelbrechungs-Information und/oder einer verteilten RadialDruck-Information unter Verwendung von der spontanen Brillouin-Streuung der einfallenden optischen gepulsten Pumpwelle (17) durch das dynamische Brillouin-Gitter an der zweiten doppelbrechenden Achse beziehungsweise oder der spontanen Brillouin-Streuung der reflektierten optischen gepulsten Pumpwelle (17) durch das dynamische Brillouin-Gitter an der ersten doppelbrechenden Achse.

**Revendications**

1. Procédé de détection optique distribuée de Brillouin, utilisant un capteur distribué avec une fibre optique de détection (10) maintenant la polarisation et ayant deux axes biréfringents, le procédé comprenant les étapes suivantes :

   - utiliser des moyens de couplage optique (19, 21, 22) connectés à une première extrémité de ladite fibre optique de détection (10), (i) transférant dans ladite fibre optique de détection (10) au moins une première onde de sonde optique (18) à polarisation linéaire) alignée avec un premier axe biréfringent et une onde de pompage optique pulsée (17) à polarisation linéaire alignée avec un deuxième axe biréfringent, et (ii) transférant des ondes optiques sortant de ladite fibre optique de détection vers des moyens de détection (23),
   - utiliser un moyen réfléchissant la lumière (20) connecté à une deuxième extrémité de la fibre optique de détection (10), réfléchissant les ondes optiques et décalant la direction de polarisation des ondes optiques réfléchies par rapport aux ondes optiques incidentes de l'un des axes biréfringents vers l'autre

   le procédé étant **caractérisé en outre par** les étapes suivantes :

- un positionnement relatif en fréquence de la première onde de sonde optique (18) et de l'onde de pompage optique pulsée (17), de manière à générer dans la fibre optique de détection (10) une première interaction de diffusion Brillouin stimulée entre l'onde de sonde optique réfléchie et l'onde de pompage optique pulsée incidente et une deuxième interaction de diffusion Brillouin stimulée entre l'onde de sonde optique incidente et l'onde de pompage optique pulsée réfléchie,

- une déduction d'informations de température et de contraintes distribuées le long de la fibre optique de détection (10) utilisant ladite première interaction de diffusion Brillouin stimulée et ladite deuxième interaction de diffusion Brillouin stimulée.

2. Procédé selon la revendication 1, comprenant en outre les étapes suivantes :

- le transfert une deuxième onde de sonde optique (43) vers la fibre optique de détection (10) avec sa polarisation alignée sur le deuxième axe biréfringent de ladite fibre (10),

- un positionnement relatif en fréquence de ladite deuxième onde de sonde optique (43) et de la première onde de sonde optique (18), afin de générer un réseau Brillouin dynamique dans la fibre optique de détection par l'interaction de diffusion Brillouin stimulée entre, respectivement, la première onde de sonde optique incidente et la deuxième onde de sonde optique réfléchie sur le premier axe biréfringent, ou la première onde de sonde optique réfléchie et la deuxième onde de sonde optique incidente sur le deuxième axe biréfringent,

- déduction d'une information de la biréfringence et/ou d'une information de la pression radiale distribuée en utilisant, respectivement, la diffusion Brillouin spontanée de l'onde de pompage optique pulsée (17) incidente par ledit réseau Brillouin dynamique sur le deuxième axe de biréfringence, ou la diffusion Brillouin spontanée de l'onde de pompage optique pulsée (17) réfléchie par ledit réseau Brillouin dynamique sur le premier axe biréfringent.

**Fig. 1**

(a)

(b)

**Fig. 2**

**Fig.3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011022829 A

- WO 2013185813 A

**Non-patent literature cited in the description**

- **WEIWEN ZOU et al.** JOURNAL OF LIGHTWAVE TECHNOLOGY. IEEE SERVICE CENTER, 15 September 2010, vol. 28, 2736-2742

- **WEIWEN ZOU et al.** *OPTICS EXPRESS,* 02 February 2009, vol. 17 (3), 1248